# EUROPEAN PATENT APPLICATION

(11) **EP 1 499 114 A2**
(43) Date of publication of application: **19.01.2005**
(21) Application number: 04103423.2
(22) Date of filing: 16.07.2004
(51) Int. Cl.: H04N 5/21

(54) **Noise reduction apparatus**

(30) Priority: 16.07.2003 KR 2003048650
(71) Applicant: Samsung Electronics Co., Ltd., Suwon-si, Gyeonggi-Do 442-742 (KR)
(72) Inventor: Song,Byung-cheol 405-1104 Cheongmyung Maeul Jugong, Suwon-si Gyeonggi-do (KR); Chun, Kang-wook 106-502 Shinyoungtong Hyundai Apt., Hwaseong-gun Gyeonggi-do (KR)
(74) Representative: Read, Matthew Charles

(57) **Abstract**

A method and apparatus remove noise from video or still image signals by rebuilding video or still image signals received via a communication channel in blocks and converting the blocks into data in the frequency domain. The noise reduction method includes: classifying a received original signal into predetermined size blocks; decomposing a received signal into a predetermined number of equal sized blocks; generating at least one rebuilt signal by removing first predetermined numbers of pixels from the beginning of the decomposed signal and second predetermined numbers of pixels from the end of the decomposed signal; and removing noise in the frequency domain by converting the original signal and the rebuilt signals into signals in the frequency domain. As a result, noise in still image and video signals is effectively removed.

## Description

The present invention relates to a method of, and corresponding apparatus for, reducing noise in an image signal.

In general, because of noise being present in a communication channel through which still or moving images are transferred, images at the receiving end are distorted when displayed. When displayed, they are unpleasant to the eye and compression efficiency is decreased when the images are compressed (and possibly stored) according to a moving image compression standard, such as the Moving Picture Expert Group (MPEG) standard.

Therefore, research into removing noise from moving or still images is actively being performed. Known noise reduction methods include spatial noise reduction and temporal noise reduction.

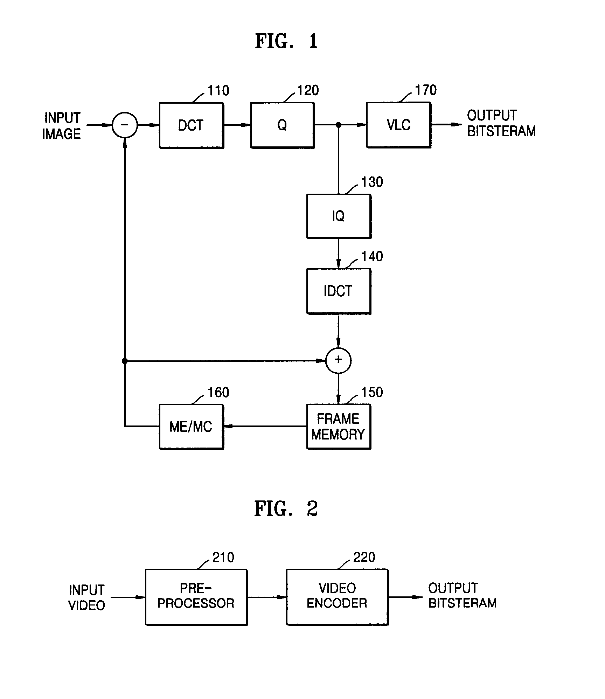

Figure 1 is a block diagram of a known video encoder.

In order to perform video on demand (VOD) services or moving image communication, the encoder generates a bit stream encoded using a predetermined compression method.

A discrete cosine transform (DCT) unit 110 transforms video data input into 8x8 pixel blocks using discrete cosine transformations in order to remove spatial redundancy. A quantization unit 120 quantizes the DCT coefficients obtained by the DCT unit 110 and then performs high compression by expressing the result using several representative values. An inverse quantization unit 130 then dequantizes the quantized video data. An inverse discrete cosine transform (IDCT) unit 140 inversely transforms the dequantized video data. A frame memory unit 150 stores the video data received from the IDCT unit 140 as frame units. A motion estimation and compensation (ME/MC) unit 160 calculates the sum of absolute differences (SAD) as a motion vector (MV) for a macro-block (16x16 pixels). The ME/MC unit 160 also calculates a block matching error. The SAD is calculated using video data of a present frame and video data of a previous frame stored in the frame memory unit 150. A variable length coding (VLC) unit 170 removes statistical redundancy from the quantized discrete cosine transformed video data using the MV calculated by the ME/MC unit 160.

Figure 2 is a block diagram of a video encoder using a known noise reduction method.

Referring to Figure 2, a pre-processor 210 is added to the conventional video encoder 220 of Figure 1. The pre-processor 210 removes noise from input video data using a known noise reduction method and inputs the reduced noise video data into the video encoder 220

The noise reduction method used in the pre-processor 210 includes spatial noise reduction, temporal noise reduction, and spatial-temporal noise reduction.

With reference to Figures 1 and 2, most known noise reduction apparatuses remove noise before encoding by placing a pre-processor before a video encoder, or after decoding by placing a post-processor after the video decoder. A noise reduction method performed by the pre-processor or the post-processor includes a method of removing noise by spatial filtering using spatial division and a method of removing temporal noise by selective low-pass filtering. However, blurring of the video often results from noise reduction using the known spatial noise reduction method. Moreover, an afterimage phenomenon occurs using the known temporal noise reduction method.

The present invention relates to a method of reducing noise in an image signal.

A method according to the present invention is characterised by generating a truncated, shifted copy of the image signal and filtering and averaging the image signal and the truncated copy in the frequency domain.

The present invention also relates to a noise reduction apparatus for reducing noise in an image signal.

An apparatus according to the present invention is characterised by means for generating a truncated, shifted copy of the image signal, and means for filtering and averaging the image signal and the truncated copy in the frequency domain.

An embodiment of the present invention will now be described with reference to Figures 3-5 of the accompanying drawings, in which:
Figure 1 is a block diagram of a known video encoder;
Figure 2 is a block diagram of a video encoder using a known noise reduction method;
Figure 3 is a block diagram of a noise reduction apparatus according to an exemplary embodiment of the present invention;
Figure 4 is a timing diagram for describing how to decompose a noise-mixed signal into blocks and generate L-1 rebuilt signals;
Figure 5 is a flowchart illustrating a video noise reduction method according to an exemplary embodiment of the present invention.

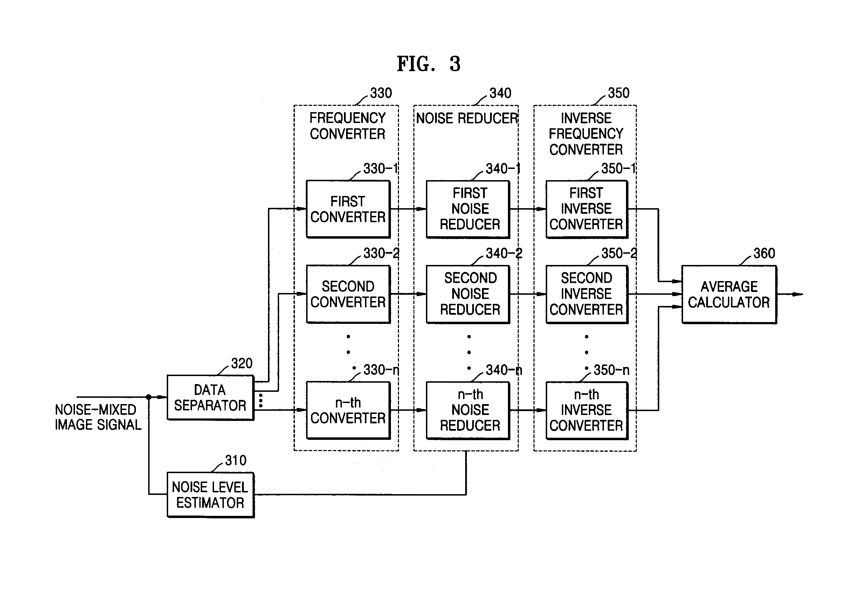

Referring to Figure 3, the noise reduction apparatus according to the present invention includes a noise level estimator 310, a data separator 320, a frequency converter 330, a noise reducer 340, an inverse frequency converter 350, and an average calculator 360. The frequency converter 330 includes first to nth converters 330-1 to 330-n (where n is equal to the number of blocks of an input signal). The noise reducer 340 includes first to nth reducers 340-1 to 340-n and the inverse frequency converter 350 includes first to nth inverse converters 350-1 to 350-n.

The noise level estimator 310 estimates a noise level of the input signal. The noise level estimator 310 is not required for the noise reduction apparatus according to the present invention but is beneficial for improving the efficiency of noise reduction.

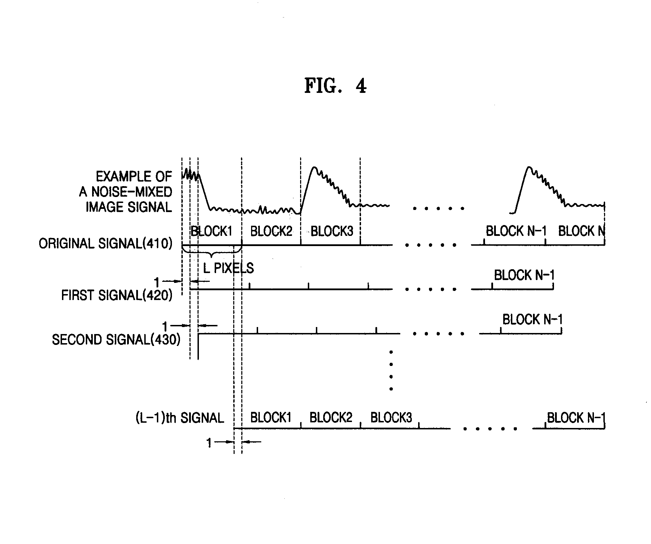

The data separator 320 divides an input image signal (the original signal including noise) into N blocks, each block having L pixels. The data separator 320 then generates L-1 signals by building N-1 blocks, each block having L pixels. The N-1 blocks are built by sequentially shifting one pixel along the divided signal. The generation of the L-1 signals will be described in detail with reference to Figure 4. The divided original and L-1 signals are transmitted to the frequency converter 330.

The frequency converter 330 converts the signals received from the data separator 320 into the frequency domain by performing a unitary transform on the generated signals. The unitary transform is preferably a DCT but may also be a discrete sine transform (DST), a discrete Walsh transform (DWT), a discrete Hadamard transform (DHT), a Haar transform, a Slant transform, or a Karhunen-Loeve (KL) transform.

The noise reducer 340 removes noise from the signals in the frequency domain using a frequency conversion matrix, for example using inner product calculations of the DCT coefficient matrices. The signals having reduced noise are sent to the frequency inverse converter 350.

The filter coefficient used to remove noise is calculated firstly by taking inner products of the filter coefficient matrices in the frequency domain and then is determined according to the estimated noise level received from the noise level estimator 310. For example, if Wiener filtering based on the DCT is used for noise reduction, a Wiener filter coefficient is determined according to the noise level input from the noise level estimator 310. However, when the unitary transform, such as the DCT is used to remove noise, Wiener filtering can be performed by calculating a simple inner product of matrices in the frequency domain. Therefore, the frequency conversion according to the exemplary embodiment of the present invention is a unitary transform, such as the DCT.

The inverse frequency converter 350 reconverts the noise-reduced signals from the frequency domain and transmits each of the reconverted signals to the average calculator 360. The average calculator 360 then averages and outputs the reconverted signals.

With reference to Figures 3 and 4, if one-dimensional processing is applied to rows in the vertical direction and rows in the horizontal direction, respectively, two-dimensional video data is obtained. Therefore, the skilled person will appreciate, that although the following description relates to one-dimensional processing, this is for convenience only and that a similar approach can be used for multi-dimensional processing, for example two-dimensional processing.

In the noise reduction method according to the present invention, one-dimensional signals are rebuilt (or generated) as in Figure 4 before being converted into the frequency domain. After noise is removed from the signals in the frequency domain, the resultant signals are averaged, for example mean averaged together and output.

With reference to Figure 4, generation of L-1 rebuilt signals will be described.

An original signal 410 composed of M pixels is divided into N (=M/L) blocks, each block having L pixels. Then, one pixel is removed from the beginning of the original signal 410, N-1 blocks, each having L pixels following the removed pixel are formed, and a first signal 420 is generated. The first signal 420 does not include the first one pixel and the last L-1 pixels of the divided original signal 410. Then, two pixels are removed from the beginning of the divided original signal 410, N-1 blocks, each having L pixels following the removed pixels are formed, and a second signal 430 is built. The second signal 430 does not include the first two pixels and the last L-2 pixels of the divided original signal. This process continues until L-1 signals are built, each signal shifting one pixel along the divided original signal 410.

Noise in the signals is reduced by filtering the divided original signal and the L-1 signals after they have been converted into the frequency domain. Noise can be removed by performing frequency conversion on all L-1 signals. However, to reduce the amount of computation, noise also can be removed by performing frequency conversion on only a portion of the L-1 signals. For example, the noise reduction can be carried out on only two signals, for example, the original signal divided into N blocks and the signal having blocks built after removing the first L/2 pixels..

For two-dimensional video data, two-dimensional noise reduction is performed by independently performing the above-described one-dimensional method in a vertical direction and a horizontal direction. Also, a two-dimensional input signal can be directly converted into the frequency domain. In this case, the data separator 320 divides an input video into two-dimensional images, each with a maximum size of LxL pixels, noise in the images is removed, and the deconverted frequency signals are averaged. Since the amount of computation is large for two-dimensional signal calculations, the computation is preferably performed for only a fraction of the signals.

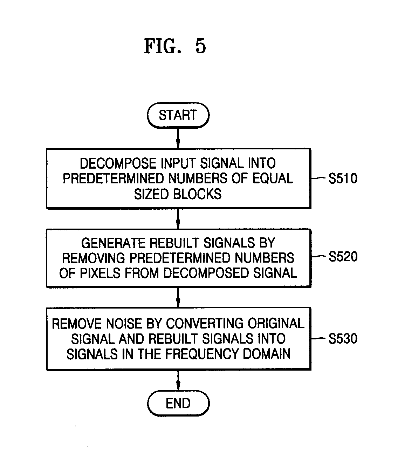

Referring to Figure 5, an original signal, for example, a still image signal or a video signal, is divided into a predetermined number of equal-sized blocks in step S510.

At least one signal is generated in step S520 by removing a predetermined number of pixels from the beginning of the first block of the divided original signal. If the number of pixels in each of the blocks is L, up to L-1 signals can be generated by shifting along the divided original signal one pixel at a time, each generated signal having N-1 blocks with L pixels contained in each. If only one other signal is generated (not including the original divided signal), the first and last L/2 pixels are removed.

In step S530, noise is removed in the frequency domain by converting the divided original signal and the generated signals into frequency domain signals. In particular, noise reduction in the frequency domain includes performing predetermined frequency conversions of the divided original signal and the generated signals, removing noise from the frequency-converted signals, reconverting the signals having reduced noise from the frequency domain, and averaging and outputting the reconverted signals.

The present invention may be embodied in a general-purpose computer by running a program from a computer readable medium, including but not limited to storage media such as magnetic storage media (e.g., ROMs, RAMs, floppy disks, magnetic tapes, etc.), optically readable media (e.g., CD-ROMs, DVDs, etc.), and carrier waves (e.g., transmission over the Internet). The present invention may also be embodied as a computer readable medium having a computer readable program code unit embodied therein for causing a number of computer systems connected via a network to effect distributed processing.

## Claims

1. A method of reducing noise in an image signal, **characterised by:**
generating a truncated, shifted copy of the image signal; and
filtering and averaging the image signal and the truncated copy in the frequency domain.

2. A method according to claim 1, comprising generating a plurality of truncated shifted copies of the image signal, wherein each copy is shifted by a different amount.

3. A method according to either one of claims 1 or 2, wherein the image signal and the or each truncated copy are filtered before said averaging takes place.

4. A signal representing program codes for controlling a computer to perform a method according to any one of claims 1 to 3.

5. A data carrier having a signal according to claim 4 recorded thereon or therein.

6. A noise reduction apparatus for reducing noise in an image signal, **characterised by:**
means (320) for generating a truncated, shifted copy of the image signal; and
means (340,350) for filtering and averaging the image signal and the truncated copy in the frequency domain.

7. A noise reduction apparatus according to claim 6, comprising means (320) for generating a plurality of truncated, shifted copies of the image signal, wherein each copy is shifted by a different amount.

8. A noise reduction apparatus according to either one of claims 6 or 7, wherein the means for filtering and averaging is operable to filter the image signal and the or each truncated copy before said averaging takes place.

9. A noise reduction method comprising:
(a) generating a decomposed signal by decomposing an input signal into a predetermined number of blocks each having a same number of pixels;
(b) generating at least one rebuilt signal by removing a predetermined number of pixels from a beginning of the decomposed signal; and
(c) removing noise in the frequency domain by converting the decomposed signal and the rebuilt signal into signals in the frequency domain.

10. The method of claim 9, wherein the input signal is a video signal or a still image signal.

11. The method of claim 9, wherein step (b) comprises:
generating L-1 rebuilt signals each having N-1 blocks, wherein L is the number of pixels in each block of the rebuilt signals, N is the number of blocks of the decomposed signal, and each rebuilt signal *l*, where *l* = 1 to L-1, is generated by removing the first *l* pixels from the beginning of the decomposed signal.

12. The method of claim 9, wherein step (b) comprises:
generating one rebuilt signal by removing a first L/2 of the pixels of the first block of the decomposed signal and a last L/2 of the pixels of a last block of the decomposed signal, where L equals the number of pixels in each block of the decomposed signal.

13. The method of claim 9, wherein step (c) comprises:
(c1) frequency converting the decomposed signal and the at least one rebuilt signal, respectively to generate frequency-converted signals;
(c2) removing the noise from the frequency-converted signals to generate reduced-noise signals;
(c3) performing inverse frequency conversion on the reduced-noise signals to generate inverse frequency converted signals; and
(c4) averaging the inverse frequency converted signals.

14. The method of claim 13, wherein step (c1) comprises subjecting the decomposed signal and the at least one rebuilt signal to a unitary transform.

15. The method of claim 13, wherein step (c2) comprises reducing the noise by calculating an inner product of conversion coefficient matrices of the frequency-converted signals.

16. The method of claim 13, wherein step (c2) comprises reducing the noise using a Wiener filtering method based on a discrete cosine transform (DCT).

17. A noise reduction apparatus comprising:
a data separator, which generates a decomposed signal by decomposing an input signal into a predetermined number of blocks, each having a same number of pixels, and generates at least one rebuilt signal by removing a predetermined number of pixels from a beginning of the decomposed signal;
a frequency converter, which performs frequency conversion on the at least one rebuilt signal and the decomposed signal to generate frequency converted signals;
a noise reducer, which removes noise from the frequency-converted signals to generate noise-reduced signals;
an inverse frequency converter, which performs inverse frequency conversion of the noise-reduced signals to generate inverse frequency converted signals; and
an average calculator, which calculates an average of the inverse frequency converted signals.

18. The apparatus of claim 17, further comprising:
a noise level estimator, which estimates a noise level of the input signal and outputs estimation information to the noise reducer.

19. The apparatus of claim 17, wherein the data separator generates L-1 rebuilt signals each having N-1 blocks, wherein L is the number of pixels in each block of the decomposed signal and the rebuilt signals, N is the number of blocks of the decomposed signal, and each rebuilt signal *l*, where *l* = 1 to L-1, is generated by removing the first *l* pixels from a first block of the decomposed signal and the last (L-*l*) pixels from a last block of the decomposed signal.

20. The apparatus of claim 17, wherein the data separator generates the at least one rebuilt signal by removing a first L/2 of the pixels of a first block of the decomposed signal and a last L/2 of the pixels of a last block of the decomposed signal, where L equals the number of pixels in each block of the decomposed signal.

21. The apparatus of claim 17, wherein the frequency conversion comprises a unitary transform.

22. The apparatus of claim 17, wherein the noise reducer removes the noise by calculating an inner product calculation of coefficient matrices of the frequency-converted signals.

23. A computer readable medium with a computer readable program for performing a noise reduction method recorded thereon, the method comprising:
(a) generating a decomposed signal by decomposing an input signal into a predetermined number of equal sized blocks;
(b) generating at least one rebuilt signal by removing a predetermined number of pixels from a beginning of the decomposed signal; and
(c) removing noise in the frequency domain by converting the decomposed signal and the rebuilt signals into signals in the frequency domain.
